# EUROPEAN PATENT APPLICATION

(11) **EP 2 400 663 A1**
(43) Date of publication of application: **28.12.2011**
(21) Application number: 10166270.8
(22) Date of filing: 17.06.2010
(51) Int. Cl.: H03K 17/00, H04B 3/54

(54) **AC power supply circuitry**

(71) Applicant: Vetco Gray Controls Limited, Bristol BS48 1BS (GB)
(72) Inventor: Davis, Julian, Frampton Cotterell, Bristol BS36 2LD (GB)
(74) Representative: Emerson, Peter James

(57) **Abstract**

There is disclosed AC power supply circuitry comprising: an AC power source (1); a semiconductor switching device (2) in a power line (8) between the power source and an output; means (4) for switching the semiconductor device between a first state in which it transmits power from the source to the output and a second state in which it does not transmit power to the output; and means (11, 12) for coupling communications data on to the power line, the circuitry further comprising means (10) for causing communications data to be coupled on to the power line only if said semiconductor device is in said first state.

## Description

### Field of the Invention

The present invention relates to AC power supply circuitry.

### Background of the Invention

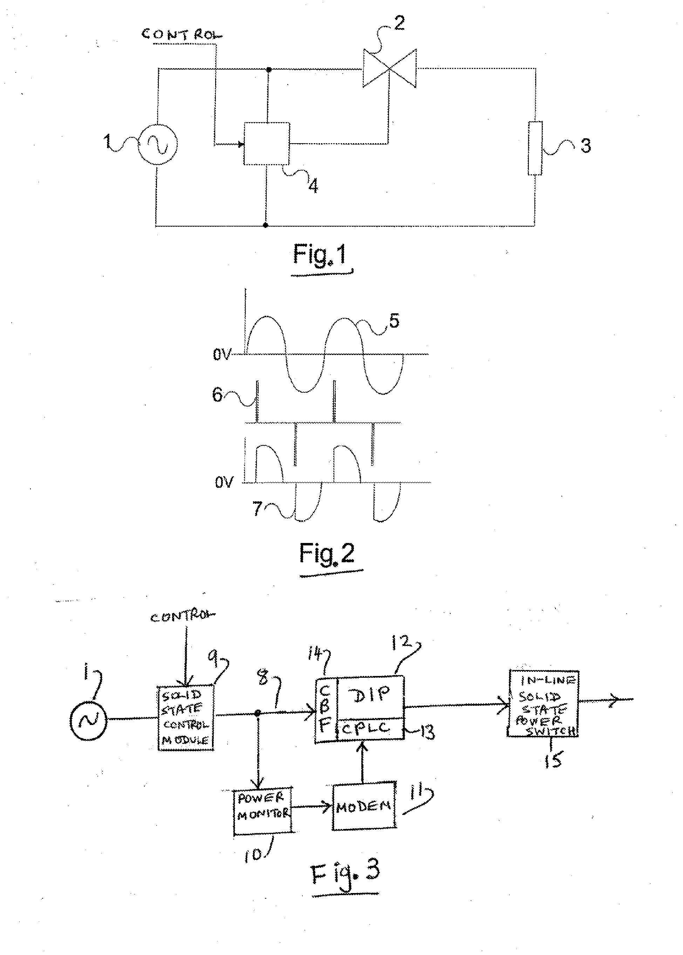

AC power control using solid state circuitry is typically provided by the employment of solid state semiconductor based power switching devices such as triacs, back-to-back thyristors and insulated-gate bipolar transistors (IGBTs). Control is achieved by delaying the switching on of the device at each half cycle of the AC supply, so that only part of the AC supply waveform is applied to a load. The electrical pulses to the trigger electrode of the triac or thyristor or the gate of an IGBT are delayed by simple electronic circuitry, with a variable delay to provide variable power control. This is illustrated in Fig. 1, for a power controller feeding a simple resistive load. The circuit consists of an AC power source 1, which is connected via a solid state semiconductor based power switching device 2, in this case a triac, in an AC power line to a load 3. A variable delay to each trigger pulse from a control input to the triac 2 is provided by a simple electronic module 4. Fig. 2 shows the AC voltage waveform 5 of the power source 1 and the electrical trigger pulses 6 applied to the trigger electrode of the triac 2, each delayed in time from the zero crossing point of the voltage waveform 5 and generated by the electronic module 4, resulting in the truncated sine wave voltage waveform 7 across the load 3.

As can be seen from the waveform figures, there is a time interval from each zero crossing point of the power source waveform to the point where the triac 2 switches on, the time interval being variable via module 4. During each such interval (when triac 2 is in a state in which it does not transmit power to its output), the power supply is effectively disconnected from the load.

In some power supply applications, triacs, thyristors and IGBTs are simply used as switches, but even in these applications such a device cannot be switched on until the voltage waveform across it has risen by a few volts, so there are periods of time when the power supply is effectively disconnected from the load, even though they are shorter than in the case of devices used for variable AC power control.

For some systems, particularly for fluid extraction well complexes, the power line is also used as a data communication line by the coupling of communications data on to the AC power line, such a system being known as a communication on power (COP) system. In such a system, the "off periods" of a solid state semiconductor based power switching device result in corruption of the communications data. Consequently, current COP systems remove the communications data from the power line, upstream of the power switching device, and reintroduce the communications data to the power line downstream of the power switching device, at considerable expense, particularly if the power line is very high voltage. This invention overcomes the need to remove and reintroduce communications data in a COP system using a solid state semiconductor based power switching device.

### Summary of the Invention

According to the present invention, there is provided AC power supply circuitry comprising:
an AC power source;
a semiconductor switching device in an AC power line between the power source and an output;
means for switching the semiconductor device between a first state in which it transmits power from the source to the output and a second state in which it does not transmit power to the output; and
means for coupling communications data on to the power line, wherein the circuitry further comprises:
   means for causing communications data to be coupled on to the power line only if said semiconductor device is in said first state.

In one embodiment, said causing means is arranged for monitoring power at said output for determining whether said semiconductor device is in said first state for controlling said coupling means.

Typically, the circuitry is for controlling power supplied to a load, said switching means being arranged for switching said semiconductor device alternately between said first and second states, the periods in which said semiconductor device is in said first and second states typically being variable.

Said switching means and said semiconductor device are typically such that said device is switched between said first and second states by an electrical pulse from said switching means. In this case, where the device is switched alternately between said first and second states, said switching means typically provides a train of electrical pulses for switching said semiconductor device between said states.

Typically, said semiconductor switching device is in said power line between said coupling means and said source. Typically, there is a further semiconductor based switching device coupled with said power line for receiving power and communications data which has been coupled on to the power line.

Circuitry according to the invention could include means for receiving power and communications data from said power line, extracting received communications data and passing supplied power to a load. In this case, such receiving means could be connected for receiving power and communications data from such a further switching device.

Circuitry according to the invention could comprise a power and communications supply in a subsea fluid extraction well complex. Typically, said source, the first-mentioned switching device and said coupling means are located in topside equipment. In this case, such a further semiconductor based switching device could be located subsea.

### Brief Description of the Drawing

Fig. 1 shows schematically a known form of AC power control circuitry;
Fig. 2 shows waveforms appearing in the circuitry of Fig. 1;
Fig. 3 shows schematically an embodiment of AC power control circuitry according to the invention; and
Fig. 4 is a block diagram of a system for supplying and transmitting AC power and communications data in a subsea fluid extraction well complex incorporating an embodiment of the invention.

### Description of Embodiments of the Invention.

In the following embodiments, in a COP system with variable control of a semiconductor based power switching device in an AC power line, corruption of communications data or failure of such data to propagate through the device is avoided by ensuring that communication is only attempted (i.e. by coupling communications data on to the power line) during periods within the power cycle when the power switching device conduction status supports the propagation of communications data. Transmission of communications data by coupling such data on to the AC power line is therefore synchronised with the AC power waveform.

Fig. 3 illustrates, diagrammatically, an embodiment of the invention. The power source 1 feeds a power line 8 including a solid state control module 9, consisting of a semiconductor based switching device and trigger control circuitry, e.g. as items 2 and 4 of Fig. 1. An electronic monitoring module 10, monitors, by continuous sampling or otherwise, the AC power line voltage and current at the output from module 9 and creates windows for communication during positive and negative half cycles when the switching device in module 9 is switched on to a state where it transmits power to the output. The output from the module 10 is a "gating" signal that connects to a modem 11, which under the control of this gating signal, only couples communications data on to the power line after module 9 during such power conduction windows. Communications data from modem 11 is coupled on to the power line 8 via a diplexer (DIP) 12, the diplexer including a communications power line coupler (CPLC) 13 and a communications blocking filter (CBF) 14 for preventing communications data from being fed back towards source 1. The COP data from diplexer 12 is typically applied for use via an in-line solid state semiconductor based power switch 15. Thus, communication transmissions are restricted to "burst" operations during the states when the switching device in module 9 is switched on, i.e. within the positive and negative power conduction cycles. This technique therefore avoids trying to propagate communications data through a subsequent, downstream semiconductor based power switching device, during zero voltage and current crossings or during partial conduction states, which can result in transmission failure or data corruption.

By virtue of the synchronization of communications data with power, power switch 15 can be a simple solid state switch without the need to remove communications data from COP data before the switch and reintroduce that data on to the power line after the switch.

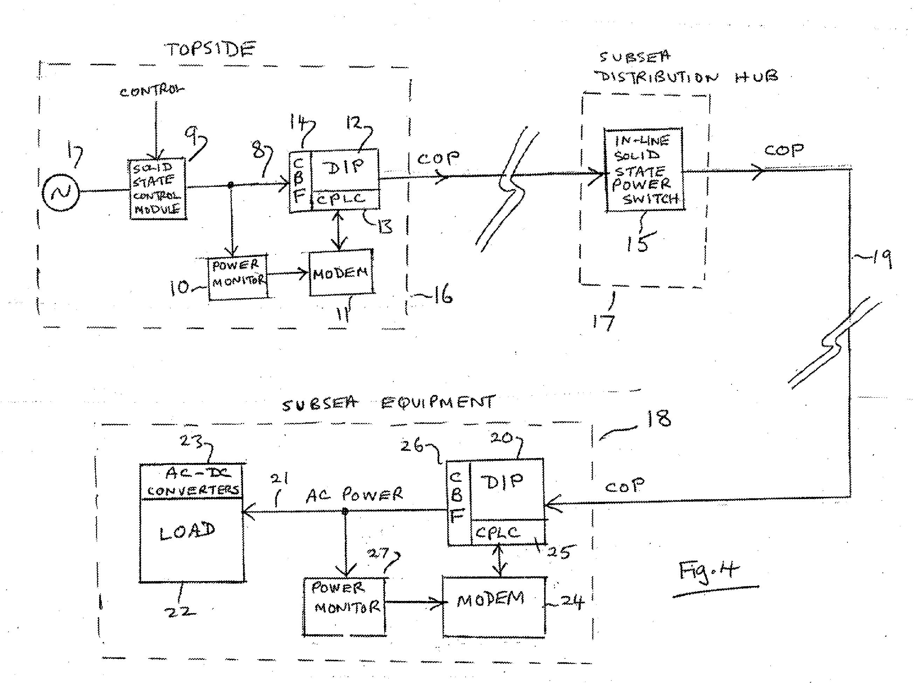

Referring to Fig. 4, this shows, in block diagrammatic form, a power supply and communications system of a subsea fluid extraction well complex. In topside equipment 16 there are items 1, 8, 9, 10, 11, 12, 13 and 14 of circuitry according to Fig. 3, the COP data from DIP 12 being sent down an umbilical to a subsea distribution hub 17 in which there is an in-line solid side state semiconductor based power switch 15. Depending on the overall system, there could be more than one such power switch 15, each respectively in-line with DIP 12. Switch 15 switches COP data to subsea equipment 18 via a connection 19, typically there being a long offset distance between hub 17 and equipment 18.

In subsea equipment 18, there is a diplexer 20 which receives the COP data and which passes AC power on a line 21 to a load 22 which typically could include AC to DC converters 23. The extraction of communications data from the COP data input to diplexer 20 is achieved by a modem 24, which extracts communications data from diplexer 20 via its communications power line coupler 25 (this occurring only during the positive and negative half cycles of the power on line 21). The diplexer 20 also comprises a communications blocking filter 26 to prevent communications data being passed to line 21. Under the control of an AC power monitoring and synchronization module 27, modem 24 can send communications data up to the topside equipment for extraction by modem 11, module 27 causing synchronization of the transmission of such data to the positive and negative half cycles of the power on line 21.

### Advantages of using the Invention

As well as enabling improved coupling of communications data on to a power line through a switching device using solid state semiconductor based power control techniques, there is enabled the removal of the need, in a COP system, to remove that data from a power line prior to a further semiconductor based power switching device and re-apply it after that device.

## Claims

1. AC power supply circuitry comprising:
an AC power source;
a semiconductor switching device in an AC power line between the power source and an output;
means for switching the semiconductor device between a first state in which it transmits power from the source to the output and a second state in which it does not transmit power to the output; and
means for coupling communications data on to the power line, wherein the circuitry further comprises:
means for causing communications data to be coupled on to the power line only if said semiconductor device is in said first state.

2. Circuitry according to claim 1, wherein said causing means is arranged for monitoring power at said output for determining whether said semiconductor device is in said first state for controlling said coupling means.

3. Circuitry according to claim 1 or 2, for controlling power supplied to a load, wherein said switching means is arranged for switching said semiconductor device alternately between said first and second states.

4. Circuitry according to claim 3, wherein the periods in which said semiconductor device is in said first and second states are variable.

5. Circuitry according to any preceding claim, wherein said switching means and said semiconductor device are such that said device is switched between said first and second states by an electrical pulse from said switching means.

6. Circuitry according to claim 5 as dependent on either of claims 3 and 4, wherein said switching means provides a train of electrical pulses for switching said semiconductor device between said states.

7. Circuitry according to any preceding claim, wherein said device is in said power line between said coupling means and said source.

8. Circuitry according to any preceding claim, wherein there is a further semiconductor based switching device coupled with said power line for receiving power and communications data which has been coupled on to said power line.

9. Circuitry according to any preceding claim, including means for receiving power and communications data from said power line, extracting received communications data and passing supplied power to a load.

10. Circuitry according to claim 9 as dependent on claim 8, wherein said receiving means is connected for receiving power and communications data from said further switching device.

11. Circuitry according to any preceding claim comprising a power and communications supply in a subsea fluid extraction well complex.

12. Circuitry according to claim 11, wherein said source, the first-mentioned switching device and said coupling means are located in topside equipment.

13. Circuitry according to claim 12 as dependent on claim 8 or 10, wherein said further semiconductor based switching device is located subsea.
